# EUROPEAN PATENT SPECIFICATION

(11) **EP 4 195 024 B1**
(45) Date of publication and mention of the grant of the patent: **27.11.2024**
(21) Application number: 22212228.5
(22) Date of filing: 08.12.2022
(51) Int. Cl.: G06F 3/12, G06F 8/61, G06F 9/4401, H04N 1/00

(54) **INFORMATION PROCESSING APPARATUS, CONTROL METHOD OF INFORMATION PROCESSING APPARATUS, AND STORAGE MEDIUM**
INFORMATIONSVERARBEITUNGSVORRICHTUNG, STEUERVERFAHREN FÜR DIE INFORMATIONSVERARBEITUNGSVORRICHTUNG UND SPEICHERMEDIUM
APPAREIL DE TRAITEMENT D'INFORMATIONS, PROCÉDÉ DE COMMANDE D'APPAREIL DE TRAITEMENT D'INFORMATIONS ET SUPPORT DE STOCKAGE

(30) Priority: 13.12.2021 JP 2021201545
(43) Date of publication of application: 14.06.2023
(73) Proprietor: CANON KABUSHIKI KAISHA, Tokyo 146-8501 (JP)
(72) Inventor: MATSUI, Yusuke, Tokyo (JP)
(74) Representative: WESER & Kollegen Patentanwälte PartmbB

(56) References cited:
- JP-A- 2004 157 871
- US-A1- 2005 183 095
- US-A1- 2009 077 367
- MICROSOFT: "Installing Drivers and Utilities without Rebooting on Windows - Version 1.0a", INTERNET CITATION, 4 December 2001 (2001-12-04), pages 1 - 8, XP002506623, Retrieved from the Internet <URL:http://www.microsoft.com/whdc/system/pnppwr/pnp/no_reboot.mspx> [retrieved on 20081203]

## Description

### BACKGROUND

### Field

The present disclosure relates to a technique to install a device driver.

### Description of the Related Art

In general, in a case of performing installation processing of a device driver, an operating system (OS) is rebooted and caused to perform initialization processing of the system as a safe way to normally operate the device driver. Japanese Patent Laid-Open No. 2009-277253 (hereinafter, referred to as PTL 1) describes a method of reducing unnecessary reboot by determining the necessity of reboot in accordance with updated contents in a case of installing a device driver on a computer.
US 2009/0077367 A1 relates to a mechanism which is activated when a user opts to hibernate their computer rather than switching it off, for determining whether (as a result of, for example, a distribution or installation of software to a computer) there are any outstanding reboot operations for the computer. US 2005/0183095 A1 relates to a control method with a determining step of determining whether or not a control program in an information processing apparatus is to be rebooted when a device driver is installed, and a display controlling step of controlling display of a display screen for reboot when it is determined that reboot is required in the determining step. Internet citation http://www.microsoft.com/whdc/ system/pnppwr/pnp/no_reboot.mspx relates to installing drivers and utilities without rebooting on Microsoft^{™} Windows^{™}. JP 2004/157871 A relates to a firmware updating method for efficiently and surely performing the updating of a firmware without impairing a user's convenience.

### SUMMARY

The present invention in its first aspect provides a control method of an information processing apparatus as specified in claims 1 to 13.

The present invention in its first aspect provides an information processing apparatus as specified in claim 14.

The present invention in its first aspect provides a storage medium storing a program causing a computer of an information processing apparatus as specified in claim 15.

Further features of the present invention will become apparent from the following description of exemplary embodiments with reference to the attached drawings.

### BRIEF DESCRIPTION OF THE DRAWINGS

Fig. 1 is a configuration diagram of a system;
Fig. 2 is an example of a hardware configuration diagram of an image processing apparatus;
Fig. 3 is an example of a hardware configuration diagram of a device connected with the image processing apparatus;
Fig. 4 is an example of a software configuration diagram of the image processing apparatus;
Figs. 5Aand 5B are diagrams illustrating an example of a UI screen displayed by an application;
Figs. 6A and 6B are diagrams illustrating an example of a message box displayed by the application;
Fig. 7 is a diagram illustrating an example of a pop-up displayed by a resident app;
Fig. 8 is a flowchart illustrating a flow of entire processing by the application;
Fig. 9 is a flowchart illustrating a flow of reboot guidance processing S802 by the application;
Fig. 10 is a flowchart illustrating an entire flow of the resident app;
Fig. 11 is a software configuration diagram of the image processing apparatus;
Fig. 12 is a diagram illustrating an example of trouble history information;
Figs. 13A and 13B are diagrams illustrating a trouble level and a countermeasure level of a driver;
Fig. 14 is a flowchart illustrating a flow of entire processing by the application;
Fig. 15 is a flowchart illustrating a flow of processing to determine the countermeasure level;
Fig. 16 is a flowchart illustrating a flow of driver installation processing; and
Fig. 17 is a flowchart illustrating a flow of the reboot guidance processing.

### DESCRIPTION OF THE EMBODIMENTS

Preferred embodiments of the present disclosure are described below in detail with reference to the appended drawings. The following embodiments are not intended to limit the present disclosure according to the scope of claims. Additionally, not all the combinations of the characteristics described in the present embodiments are necessarily required for the means for solving the problems of the present disclosure.

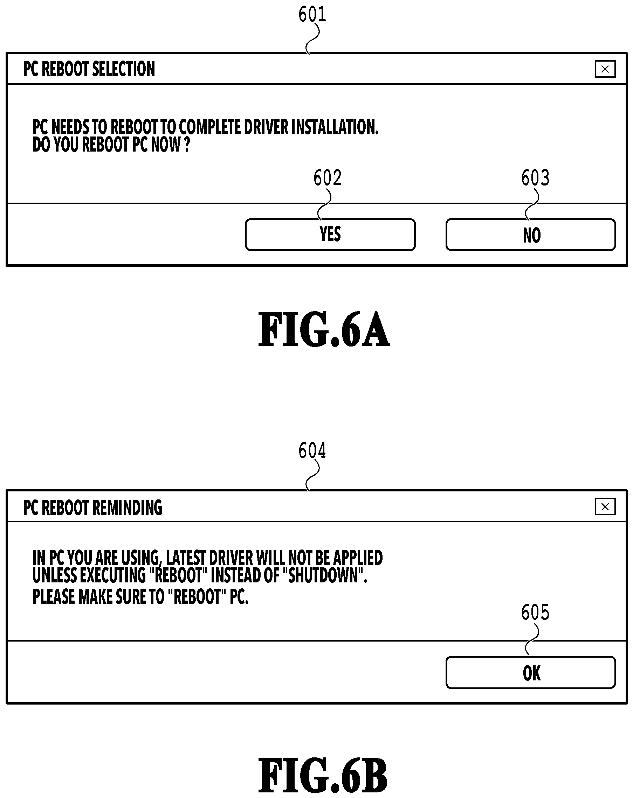

Before describing the present embodiment, conventional installation processing of a device driver is described. In a case of performing the installation processing of the device driver, a general and safe way to normally operate the device driver is to reboot an OS and cause the OS to perform initialization processing of the system. In this case, it can be considered to display on a screen of a computer a selection instruction screen (see Fig. 6A) for a user to select whether to perform reboot immediately or later when the installer ends.

In a case where the user wants to avoid rebooting, the user makes selection and instructs the computer to reboot after necessary processing ends through the above-described selection instruction screen such that reboot after the installation processing ends is not performed. Such a situation is, for example, a case where the user wants to avoid rebooting as much as possible when the installation processing ends in, for example, a case where a device driver is installed on a computer that operates whole day. On the other hand, for the device driver installation, there is also a case where an operation of the system is guaranteed without reboot depending on conditions.

However, the system on which the device driver is installed displays in a single uniform way a fixed reboot instruction input screen without determination on the necessity of reboot. Accordingly, there is a problem that the user needs to determine the necessity of rebooting the system all by himself/herself. Additionally, there is also a problem that professional knowledge of the OS, the device driver, the service provided by the system, or the like is required to determine the necessity of rebooting the system, and thus it is difficult for a general user to make the determination by himself/herself.

Moreover, if the user operates the computer without proper determination on the necessity of reboot, there is a risk that the system does not operate properly as a result of not rebooting in a case where it is necessary. Furthermore, the user may not be able to determine a case where rebooting is unnecessary, and there is a risk that unnecessary reboot of the system is performed.

Additionally, in the Windows (registered trademark) OS, a function called high-speed start-up is provided from Windows 8 (registered trademark). With the high-speed start-up function enabled, in a case of shutting down a Windows PC by a shutdown operation, it is possible to set the PC to hibernation instead of complete shutdown (shutdown to completely power off). With the PC kept in hibernation, the PC can be activated earlier than usual in a case of starting up the PC next time. Note that, in a case where the shutdown operation is performed while the high-speed start-up function is not enabled, complete shutdown is executed.

However, in a case of an OS environment in which the high-speed start-up functions, there is a risk that the installed driver is kept out of updating in a case where the user rejects immediate reboot of the PC proposed by the installer and also performs the shutdown operation. This is because, as described above, even in a case where the shutdown operation is performed, complete shutdown is not executed in a state where the high-speed start-up function is enabled. Note that, in a case where the reboot operation is performed, complete shutdown is executed for reboot even in a case where the high-speed start-up function is enabled. Thus, in the above-described case, as long as the user does not reboot (completely shut down) the PC, updating of the driver is not applied.

Accordingly, in the following embodiments, there is described a method of notifying the user of that it is necessary to "reboot" the PC in the PC in which the high-speed start-up function is in the enabled state to prevent a problem that update installation of the device driver cannot be normally performed.

### <Embodiment 1>

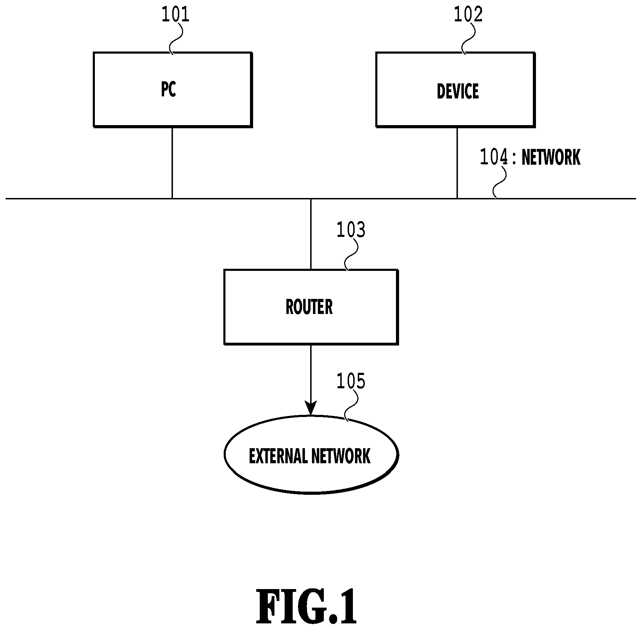

Fig. 1 is a block diagram illustrating an example of a configuration of a network system including an information processing apparatus (PC 101). In the system illustrated in Fig. 1, the PC 101, a device 102, and a router 103 are connected to each other through a network 104. The devices establish communication according to the Transmission Control Protocol/Internet Protocol (TCP/IP) and the User Datagram Protocol (UDP). The network 104 is connected with an external network 105 through the router 103. The device 102 is a peripheral device such as a printer, a copier, a facsimile, or a scanner or is a device provided with multiple functions of the peripheral devices. The PC 101 is able to control the device 102 by installing a corresponding driver.

The device 102 is compatible with the TCP/IP. Additionally, the device 102 is compatible with the Web Services on Devices (WSD) that is a standard network protocol of the Windows OS compatible with Universal Plug and Play (UPnP). Moreover, the device 102 is also compatible with the Link-Local Multicast Name Resolution (LLMNR) protocol that can perform name resolution of a neighboring network device. The WSD function or the LLMNR function of the device 102 allows the user to switch enabling and disabling of the function by directly operating the device 102. The router 103 has a Dynamic Host Configuration Protocol (DHCP) server function and allocates an IP address to the PC 101 and the device 102.

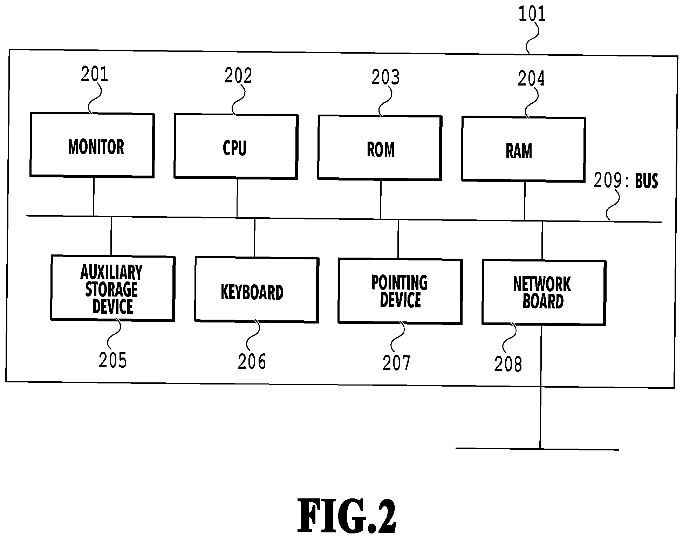

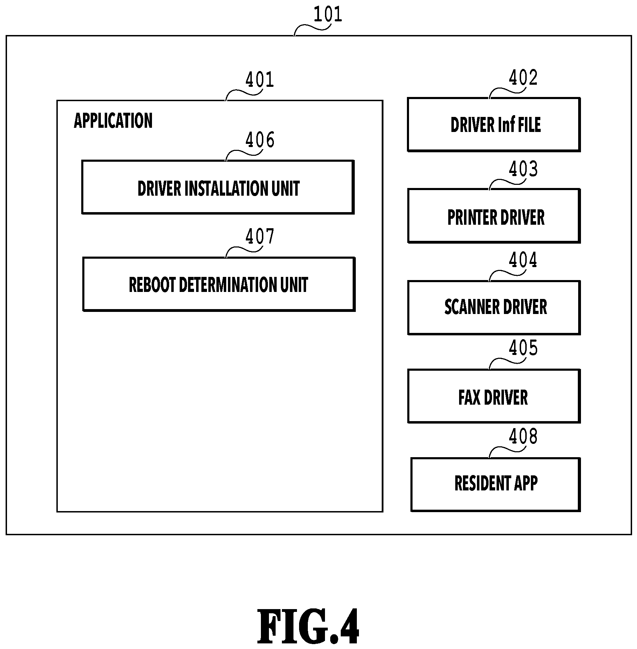

Fig. 2 is a hardware configuration diagram of the PC 101. The PC 101 includes a monitor 201, a CPU 202, a ROM 203, a RAM 204, an auxiliary storage device 205, a keyboard 206, a pointing device 207, and a network board 208. The constituents are connected to each other through a bus 209. The monitor 201 displays a user interface (hereinafter, UI) of an application such as an application 401 or the driver. The CPU 202 loads a program of the application, the driver, or the like stored in the ROM 203 or the auxiliary storage device 205 into the RAM 204 and executes the loaded program. The ROM 203 stores basic software such as BIOS or various programs for implementing processing executed by the PC 101. The RAM 204 temporarily stores software such as the application and the driver, or data used by the software. The auxiliary storage device 205 is hard disk, for example. The auxiliary storage device 205 stores software (a program) such as the OS, the application, the driver, or a variety of modules. The driver stored in the auxiliary storage device 205 includes a device driver (a scanner driver, a printer driver, a facsimile driver, or the like) that controls the device 102. Additionally, the driver stored in the auxiliary storage device 205 includes a display control driver that controls display on the monitor 201, a keyboard driver that controls the keyboard 206, or a pointing device driver that controls the pointing device 207. Moreover, the driver stored in the auxiliary storage device 205 includes a network driver that controls communication of the network board 208. The application stored in the auxiliary storage device 205 includes the application 401 illustrated in Fig. 4. The application 401 has a device search function by the TCP/IP. Note that, the application 401 may call a module having the search function to cause the module to execute the function. Additionally, the search function and the information setting function may be provided in different modules, respectively. The keyboard 206 and the pointing device 207 are an input device that inputs an instruction from the user. The network board 208 establishes communication with the device through the network.

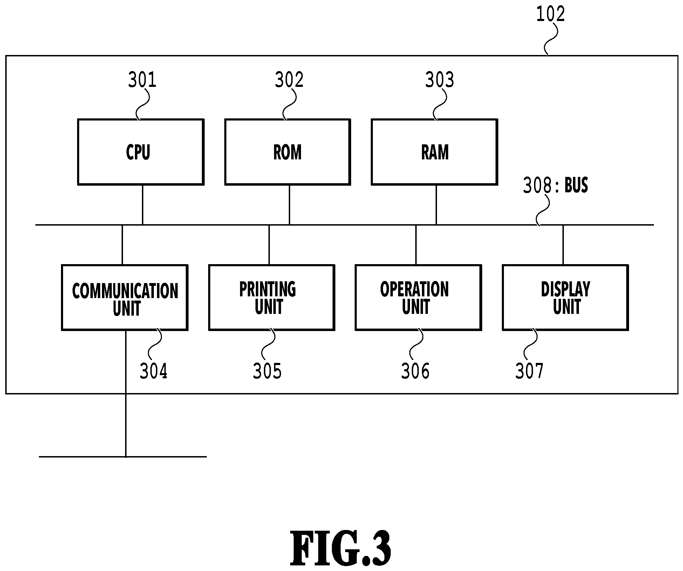

Fig. 3 is an example of a hardware configuration in a case where the device 102 is a printer. The device 102 includes a CPU 301, a ROM 302, a RAM 303, a communication unit 304, a printing unit 305, an operation unit 306, and a display unit 307. The various constituents included in the device 102 are connected to each other through a bus 308. The CPU 301 is a microprocessor, for example.

The CPU 301 functions as a central processing apparatus of the device 102. The CPU 301 loads a program stored in the ROM 302 into the RAM 303 and executes the loaded program to control the communication unit 304, the printing unit 305, the operation unit 306, and the display unit 307. The ROM 302 stores various programs for implementing the processing executed by the device 102. The RAM 303 is used as a working area of the CPU 301. The RAM 303 temporarily stores various data. The communication unit 304 establishes communication with another device through the network. The printing unit 305 prints image data on a printing medium such as paper, for example.

The operation unit 306 includes an input device such as a button or a touch panel. The display unit 307 displays a screen for operating the device 102 or various pieces of information on the device 102. Note that, in a case where the device 102 is a device other than a printer, the device 102 includes another constituent instead of the printing unit 305 or in addition to the printing unit 305. For example, in a case where the device 102 is a scanner, the device 102 includes a reading unit that reads an image on a document as another configuration.

Fig. 4 is a block diagram illustrating a software configuration of the PC 101. As illustrated in Fig. 4, the PC 101 includes the application 401, a driver INF file 402, a printer driver 403, a scanner driver 404, and a fax driver 405.

The application 401 is a driver installer and searches for the device 102 connected with the PC 101 and displays information on the detected device onto the monitor 201. Then, a driver of a device corresponding to information selected by the user out of the displayed information is installed on the PC 101.

The driver INF file 402 includes the model of the device corresponding to the driver (the printer driver 403, the scanner driver 404, or the fax driver 405) installed by the application 401.

The application 401 includes a driver installation unit 406 and a reboot determination unit 407. The units illustrated in Fig. 4 are implemented by the CPU 202 of the PC 101 reading and executing the application 401 stored in the auxiliary storage device 205. In the present embodiment, the application 401 searches for a device in the same network and displays the detected device on the monitor 201 included in the PC 101. On the other hand, in a case where no device can be found in the same network, the application 401 displays on the monitor 201 the result that no device can be detected.

The driver installation unit 406 installs the driver. Note that, the driver installation unit 406 installs a different driver depending on the type of the device. For example, in a case where the device is a printer, the application 401 installs the printer driver 403 on the PC 101. Additionally, in a case where the device is a scanner, the application 401 installs the scanner driver 404 on the PC 101. Moreover, in a case where the device is a multi-function printer (MFP), the application 401 installs the printer driver 403, the scanner driver 404, and the fax driver 405 on the PC 101.

The reboot determination unit 407 determines the necessity of rebooting the PC 101 for installing the device driver. Then, depending on the determination result, the reboot determination unit 407 displays a guidance screen to prompt the reboot on the monitor 201 of the PC 101. Additionally, the reboot determination unit 407 communicates with the device 102 and identifies the type of a port that is generatable in the PC 101. A resident app 408 is a resident app that notifies the user of a PC reboot guidance at a fixed time interval in a case where the guidance for the user to immediately reboot the PC 101 that is displayed by the installer is rejected.

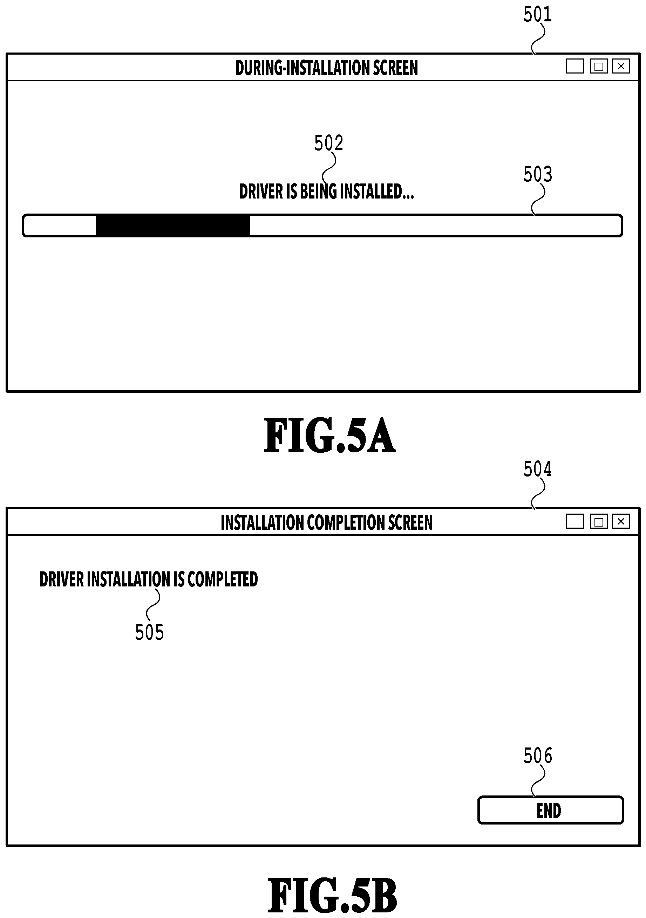

Figs. 5A and 5B are diagrams illustrating an example of a UI screen displayed by the application 401. The screen in Fig. 5A is displayed while the application 401 executes the processing of the driver installation unit 406 or the reboot determination unit 407. A during-installation screen 501 includes an internal processing status 502 indicating the status of the processing. For example, in the middle of the processing of the driver installation unit 406 executed by the application 401, a message such as "driver is being installed..." and a progress bar 503 are displayed in the internal processing status 502.

Fig. 5B is a diagram illustrating an installation completion screen 504 displayed when the internal processing in Fig. 5A is completed. For example, in a case where the processing of the driver installation unit 406 is completed, an installation completion message 505 is displayed in the installation completion screen 504. Note that, the installation completion screen 504 may be displayed as a different screen from the during-installation screen 501, or the displayed contents may be changed within the same screen as the during-installation screen 501 and the screen may be displayed as the installation completion screen 504. Additionally, on the installation completion screen 504, once an "END" button 506 or a × button at the upper right of the screen is pressed by the user, the application 401 executes the processing in the reboot determination unit 407.

Figs. 6A and 6B are diagrams illustrating an example of a message box displayed by the application 401.

In a case where it is determined that reboot of the PC 101 is necessary as a result of execution of the reboot determination unit 407 by the application 401, a PC reboot selection message 601 illustrated in Fig. 6A is displayed. On the other hand, in a case where it is determined that reboot of the PC 101 is unnecessary as a result of execution of the reboot determination unit 407 by the application 401, the application 401 closes the installation completion screen 504.

Fig. 6B is an example of the message box displayed by the application 401. Specifically, in a case where the high-speed start-up function of the PC 101 is in the enabled state and also a "NO" button 603 or a × button at the upper right of the screen of the PC reboot selection message 601 is pressed by the user, the message box is displayed. This message is a message for notifying the user of that "reboot" is necessary for the PC 101 instead of "shutdown" for updating to the latest driver. In other words, this message is a message prompting the user to execute an operation to "reboot" the PC 101. Additionally, in other words, this message is a message notifying the user of that the driver is not updated to the latest driver until "reboot" of the PC 101 is performed. Note that, the present message box may include a message notifying the user of that the high-speed start-up function of the PC 101 is in the enabled state, for example. This is because, in a PC in which the "high-speed start-up function" is enabled in the system setting of the PC 101, "shut down" is "hibernation", and "complete shutdown" that is required to apply the update installation is not executed. Note that, since "reboot" includes complete shutdown of the PC, the update installation is applied.

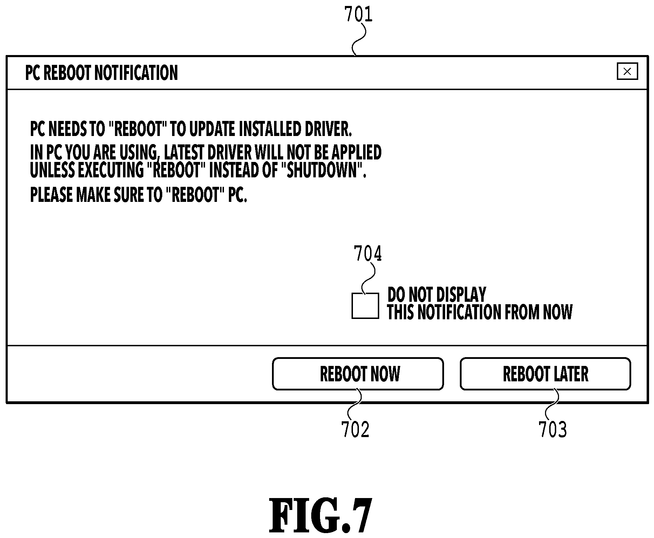

Fig. 7 is an example of a PC reboot notification pop-up 701 displayed by the resident app 408. The PC reboot notification pop-up 701 is a pop-up displaying a notification to the user by the resident app 408 prompting reboot periodically after the user presses an "OK" button 605 or a × button at the upper right of the screen in a PC reboot reminding message 604. In a case where the user presses a "reboot now" button 702, the resident app 408 ends and the PC 101 is rebooted. In a case where the user presses a "reboot later" button 703 or a × button at the upper right of the screen, the resident app 408 closes the PC reboot notification pop-up 701. Once a certain interval of time (for example, 30 minutes) elapses after the resident app 408 closes the PC reboot notification pop-up 701, the resident app 408 displays the PC reboot notification pop-up 701 again. Note that, in a case where the user enables a checkbox 704 and presses the "reboot later" button 703 in the PC reboot notification pop-up 701, the resident app 408 does not display the PC reboot notification pop-up 701 again even in a case where the certain interval of time elapses.

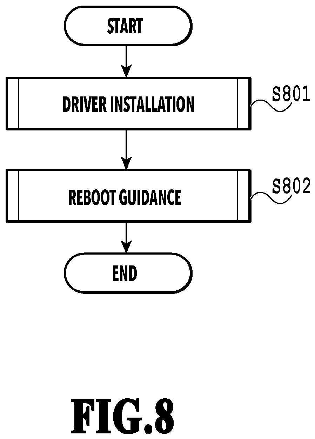

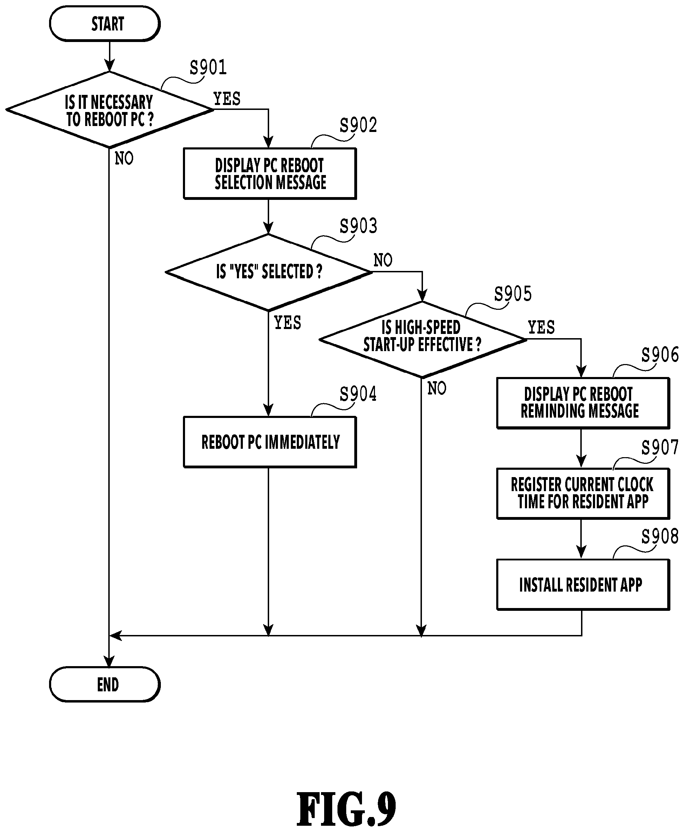

Fig. 8 is a flowchart illustrating processing from the activation to the end of the application 401. The present flowchart is processing executed by the functions provided in the application 401. That is, the processing is implemented by the CPU 202 deploying and executing the program stored in the auxiliary storage device 205 of the PC 101 into the RAM 204. Note that, a sign "S" in the descriptions of each processing means that it is a step in the flowchart, and the same applies to Fig. 9 and later.

The present flowchart is started by the user executing an update installation operation of the printer driver 403, the scanner driver 404, the fax driver 405, or the like.

In S801, the application 401 displays the during-installation screen 501. The application 401 then executes driver installation processing. The driver installation processing is performed by the driver installation unit 406. After S801, the application 401 switches the UI screen from the during-installation screen 501 to the installation completion screen 504. In the installation completion screen 504, once the user presses the "END" button or the × button at the upper right of the screen, the processing proceeds to S802. Note that, when the driver installation processing is completed in Fig. 5A, the processing may proceed to S802 without displaying the installation completion screen 504 in Fig. 5B.

In S802, the application 401 closes the installation completion screen 504 (or the during-installation screen 501) and executes reboot guidance processing. Details of the processing in S802 are described later in Fig. 9. After S802, the application 401 ends the processing of the present flow.

Fig. 9 is a flowchart illustrating details of the flow of the reboot guidance processing in Fig. 8. First, in S901, the reboot determination unit 407 determines the necessity of rebooting the PC 101 to apply the updated contents as a result of installation of the driver through the driver installation processing. In this process, the determination on the necessity of reboot may be made by the reboot determination unit 407 obtaining "information on necessary PC reboot", which is created based on whether installation of the driver was necessary for the past similar update processing, from the PC 101, for example. If it is determined that reboot of the PC is unnecessary (if it is determined as NO in S901), the reboot determination unit 407 ends the processing in Fig. 9. On the other hand, if reboot of the PC 101 is necessary (if it is determined as YES in S901), the processing proceeds to S902.

In S902, the reboot determination unit 407 displays the PC reboot selection message 601. In S903, if the user presses a "YES" button 602 in the PC reboot selection message 601, the reboot determination unit 407 proceeds to S904 and executes immediate reboot of the PC 101. After S904, the reboot determination unit 407 ends the present flow.

On the other hand, in S903, if the user presses the "NO" button 603 or the × button at the upper right of the screen in the PC reboot selection message 601, the processing proceeds to S905.

In S905, the reboot determination unit 407 determines whether the high-speed start-up function of the PC 101 is enabled. The determination may be made by the reboot determination unit 407 obtaining from the PC 101 "high-speed start-up function state information" in which the state of the high-speed start-up function in the current PC 101 is described, for example. In S905, if the high-speed start-up function of the PC 101 is in the disabled state or not supported, the reboot determination unit 407 ends the present flow. On the other hand, in S905, if the high-speed start-up function of the PC 101 is enabled, the processing proceeds to S906.

In S906, the reboot determination unit 407 displays the PC reboot reminding message 604 on the monitor 201. Once the user presses the "OK" button 605 or the × button at the upper right of the screen in the PC reboot reminding message 604, the reboot determination unit 407 closes the PC reboot reminding message 604. After the PC reboot reminding message 604 is closed in S906, in S907, the reboot determination unit 407 registers on a registry in the PC 101 current clock time information for the resident app 408 to periodically display the PC reboot notification pop-up 701.

In S908, the reboot determination unit 407 installs the resident app 408. After the installation processing of the resident app 408, the resident app 408 is activated, and the start-up registration or the service registration of the OS is performed. Thus, resident activation is implemented. After S908, the reboot determination unit 407 ends the present flow.

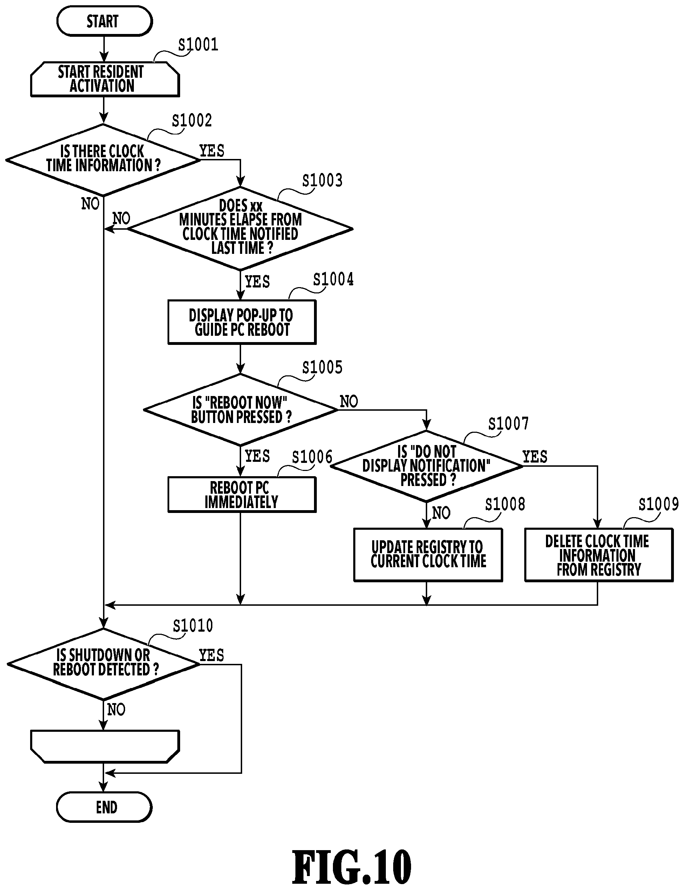

Fig. 10 is a flowchart illustrating a flow of processing by the resident app 408 installed by the application 401. The present flowchart is processing executed by the resident app 408. That is, the processing is implemented by the CPU 202 deploying and executing the program stored in the auxiliary storage device 205 of the PC 101 into the RAM 204.

First, in S1001, the resident app 408 is activated. The resident app 408 is activated by the OS function after the application 401 performs the installation processing of the resident app 408 in S908 or when the PC 101 is activated.

In S1002, the resident app 408 obtains the clock time information registered by the application 401 from the registry in the PC 101. In S1002, if the clock time information is not registered on the registry and no clock time information can be obtained, the processing proceeds to S1010. On the other hand, in S1002, if the clock time information is registered on the registry, the processing proceeds to S1003. In S1003, the resident app 408 confirms the elapsed time from the clock time registered on the registry. If the certain clock time (for example, 30 minutes) does not elapse from the clock time registered on the registry, the processing proceeds to S1010.

On the other hand, in S1003, if the certain clock time elapses from the clock time registered on the registry, the processing proceeds to S1004. In S1004, the resident app 408 displays the PC reboot notification pop-up 701 on the monitor 201. In S1005, if the user presses the "reboot now" button 702 on the PC reboot notification pop-up 701, the resident app 408 proceeds to S1006. On the other hand, if the user presses the "reboot later" button 703 or the × button at the upper right of the screen on the PC reboot notification pop-up 701, the processing proceeds to S1007.

In S1006, the resident app 408 instructs the PC 101 to reboot immediately, and the processing proceeds to S1010. In S1007, the resident app 408 confirms the state of the "do not display notification from now" checkbox 704. That is, in S1006, if the user presses the "reboot later" button 703 while the "do not display notification from now" checkbox 704 is checked, the processing proceeds to S1009 after the present step.

On the other hand, if the user presses the "reboot later" button 703 while the "do not display notification from now" checkbox 704 is not checked, the processing proceeds to S1008 after the present step. In S1008, the resident app 408 updates the clock time information registered on the registry to the current clock time, and the processing proceeds to S1010. In S1009, the resident app 408 deletes the clock time information registered on the registry, and the processing proceeds to S1010.

In S1010, the resident app 408 determines whether the PC 101 is shut down or rebooted. If the PC 101 is shut down or rebooted (that is, if it is determined as YES), the resident app 408 ends the loop processing and ends the present flow. On the other hand, if the PC 101 is not shut down or rebooted (that is, if it is determined as NO), the resident app 408 proceeds to the beginning of the loop processing (S1001). In the present embodiment, in a case where the processing proceeds from S1002, S1008, and S1009 to S1010, the determination in S1010 is NO, and the processing proceeds to S1001. On the other hand, in a case where the processing proceeds from S1006 to S1010, the determination in S1010 is YES, and the present flow ends. Note that, the resident app 408 may stop the resident activation with the end of the present flow.

As described above, according to the present embodiment, update installation of the device driver can be performed normally. Specifically, in a case where it is determined that the PC needs to reboot to normally perform update installation of the driver, the application 401 confirms whether the high-speed start-up function of the PC is in the enabled state. With this, it is possible to notify the user who does not know that the high-speed start-up function is enabled of that update installation of the driver cannot be performed by shutting down the PC. Additionally, it is possible to prevent the user himself/herself from forgetting reboot of the PC by periodically displaying the PC reboot notification pop-up 701 by the resident app 408 or the like even in a case where the user rejects immediate reboot.

Note that, in the present embodiment, an example where the "do not display notification from now" checkbox 704 is provided in the PC reboot notification pop-up 701 is described; however, it is not limited thereto. For example, a checkbox having the similar function may be provided in the PC reboot reminding message 604.

Additionally, in the present embodiment, an example where the PC reboot notification pop-up 701 is displayed from the resident app 408 bundled together with the application 401 is described; however, it is not limited thereto. For example, a notification pop-up may be displayed from another application that is already in the PC 101, or if the OS built in the PC 101 has a pop-up display function that allows for designation of displayed contents or display intervals, the function may be used.

Moreover, for example, in a case where update installation of the two drivers, the printer driver 403 and the scanner driver 404, is performed, the resident app 408 may manage the notification of reboot related to multiple number of driver installation with a single activation.

Furthermore, although S907 and S908 are executed after S906 as the processing by the application 401 in the above descriptions, the processing may end without executing S907 and S908. In accordance with this, the processing by the resident app 408 illustrated in Fig. 10 may not be executed.

### <Embodiment 2>

According to the descriptions of Embodiment 1, it is possible to notify the user who does not know that the high-speed start-up function is enabled of that update installation of the driver cannot be performed by shutting down the PC. Additionally, even in a case where the user rejects immediate reboot, it is possible to prevent the user himself/herself from forgetting rebooting the PC by periodically displaying the PC reboot notification pop-up by the resident app and the like.

In the present embodiment, here is additionally assumed the following use case. That is, for example, a case where a failure of the already installed driver is minor (for example, a character in user interface (UI) texts of the driver is missing). In a case where a failure of the already installed driver is major (for example, the device itself has an error), the PC needs to be rebooted for normal installation, and therefore the method of Embodiment 1 is effective. However, in a case where a failure of the already installed driver is minor, there is no problem to use the device driver without normally performing update installation by rebooting the PC. Additionally, if the user is reminded of PC reboot frequently by the pop-up and the like, there is a risk that some users may be bothered.

In the present embodiment, here is described a method of switching the installation sequence or the guidance method of PC reboot in accordance with the degree of severity of the failure remaining in the already installed device driver even in a use case as described above. Note that, descriptions of a configuration duplicated with that of Embodiment 1 are omitted.

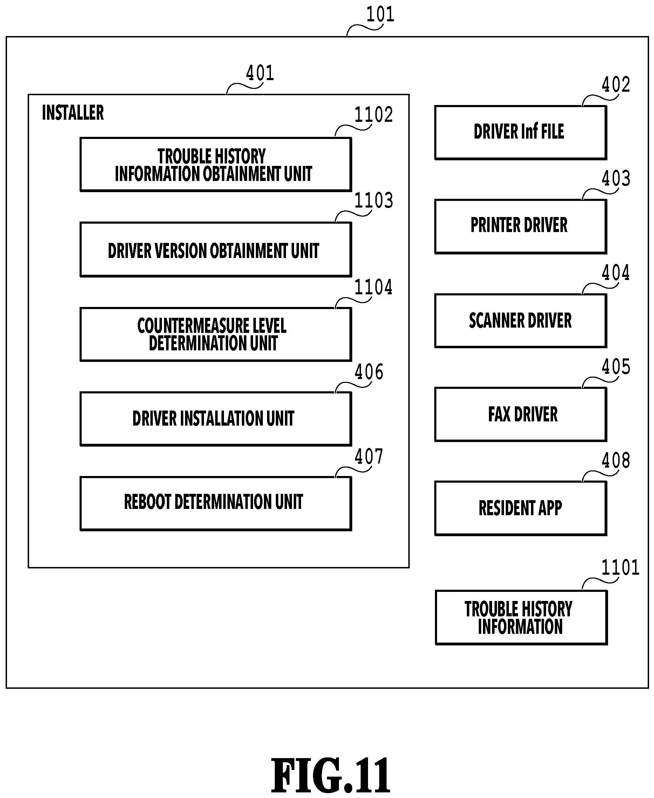

Fig. 11 is a block diagram illustrating a software configuration of the PC 101 communicating with the device 102 in the present embodiment. Trouble history information 1101 is an external file managing information on troubles that occur in the device driver in the past. In the trouble information, the degrees of severity of the troubles (hereinafter, trouble levels), the versions in which the troubles occur, and the details of the troubles are associated with each other in stages. A trouble history information obtainment unit 1102 obtains the trouble levels and the versions in which the troubles occur registered on the trouble history information 1101.

A driver version obtainment unit 1103 obtains version information on the device driver already installed on the PC 101. In this process, the target as the version information on the already installed driver to be obtained has the same device name as that registered on the driver INF file 402. A countermeasure level determination unit 1104 determines the countermeasure level of the application 401 based on the trouble level of the already installed driver, the version information on the already installed driver, and the state of the high-speed start-up function of the PC 101.

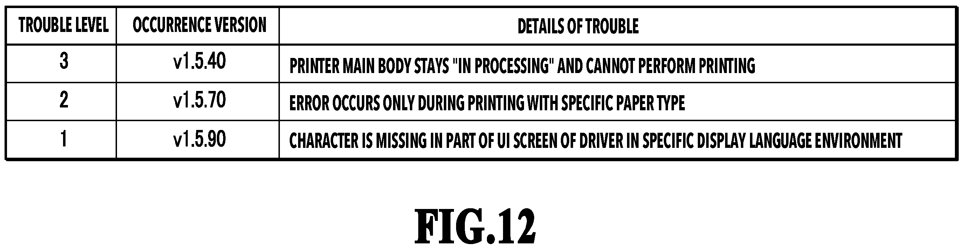

Fig. 12 is a diagram illustrating an example of the trouble history information 1101. For example, a trouble with the details that an error occurs only during printing with a specific paper type in the version of v1.5.70 is described as a trouble level 2.

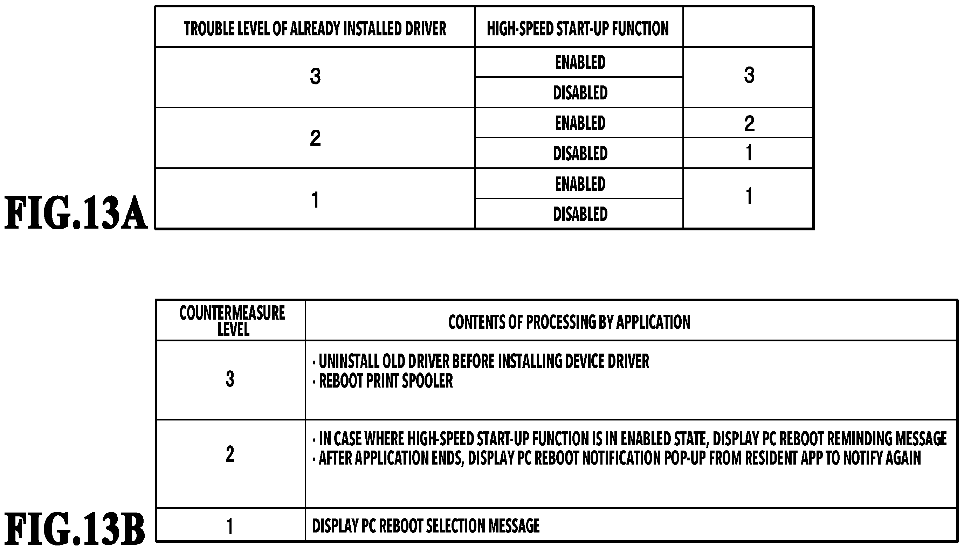

Figs. 13A and 13B are diagrams illustrating conditions for a case of countermeasure level determination and is a diagram illustrating details of contents of processing by the application in accordance with the countermeasure level. Fig. 13A is a table illustrating an example of conditions for the countermeasure level determination unit 1104 of the application 401 in the present embodiment to determine the countermeasure level.

Fig. 13B is a table illustrating an example of contents of processing for each countermeasure level that are processed by the application 401 in the present embodiment. As illustrated in Figs. 13A and 13B, the countermeasure levels are set in stages based on the trouble levels of the already installed driver and the high-speed start-up function and are divided into three stages in the present embodiment. The application 401 performs processing for the trouble by executing the processing in accordance with the countermeasure level.

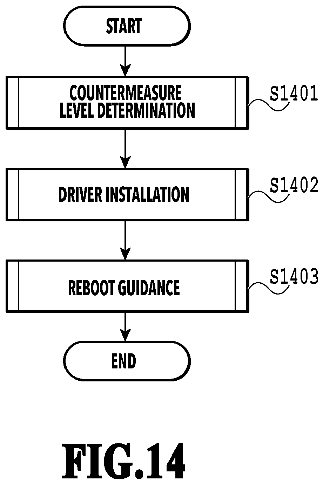

Fig. 14 is a flowchart illustrating a flow of processing from the activation to the end of the application 401 in the present embodiment. The present flowchart is processing executed by the functions provided in the application 401. That is, the processing is implemented by the CPU 202 deploying and executing the program stored in the auxiliary storage device 205 of the PC 101 into the RAM 204.

The present flow is started by the user activating the application 401. In S1401, the application 401 displays the during-installation screen 501 and determines the countermeasure level.

Next, in S1402, the application 401 installs the device driver. Once the installation is completed, the application 401 switches the UI screen from the during-installation screen 501 to the installation completion screen 504.

In the installation completion screen 504, once the user presses the "END" button 506 or the × button at the upper right of the screen, the application 401 closes the installation completion screen 504 and proceeds to S1403 to execute the reboot guidance of the PC 101. After S1403, the application 401 ends the processing in Fig. 14. Note that, the countermeasure level determined in S1401 is reflected on the procedure contents during the driver installation processing and the reboot guidance processing in S1402 and S1403. Detailed processing flows of the countermeasure level determination processing, the driver installation processing, and the reboot guidance processing in Fig. 14 are described, respectively.

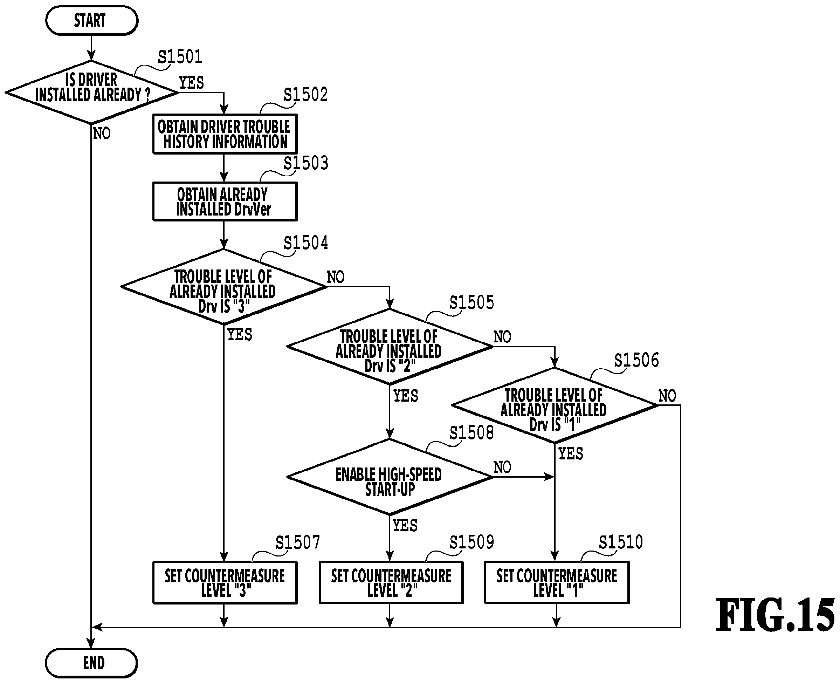

Fig. 15 is a flowchart illustrating a detailed flow of the countermeasure level determination processing (S1401) in Fig. 14.

First, in S1501, the application 401 determines whether the device driver as the installation target is already installed on the PC 101. If the device driver is not installed yet, the application 401 ends the processing in Fig. 15. On the other hand, if the device driver is already installed, the processing proceeds to S1502.

In S1502, the trouble history information obtainment unit 1102 obtains the trouble information from the trouble history information 1101. In S1503, the driver version obtainment unit 1103 obtains the version information from the already installed driver that is installed on the PC 101.

Next, in S1504, S1505, and S1506, the countermeasure level determination unit 1104 determines the trouble level in a case where the version of the already installed driver matches the version information included in the trouble information. In S1504, if it is determined that the trouble level is 3 based on the version of the already installed driver, the countermeasure level determination unit 1104 sets the countermeasure level to 3 in S1507 and ends the present flow. If it is determined that the trouble level is not 3 in S1504, the processing proceeds to S1505. In S1505, the countermeasure level determination unit 1104 determines whether the trouble level is 2. If it is determined that the trouble level is 2, the processing proceeds to S1508. On the other hand, if it is determined that the trouble level is not 2, the processing proceeds to S1506. In S1508, the countermeasure level determination unit 1104 determines whether the high-speed start-up function of the PC 101 is in the enabled state or the disabled state. In S1508, if the high-speed start-up function is in the enabled state, the countermeasure level determination unit 1104 sets the countermeasure level to 2 and ends the processing in Fig. 15. On the other hand, if the high-speed start-up function is in the disabled state in S1508, the countermeasure level determination unit 1104 sets the countermeasure level to 1 and ends the present flow.

Additionally, in S1506, if it is determined that the trouble level is 1, the processing proceeds to S1510, the countermeasure level determination unit 1104 sets the countermeasure level to 1 and ends the present flow. On the other hand, if it is determined that the version of the already installed driver does not match any of the versions of the trouble levels included in the trouble information (if it is determined as NO in S1506), the countermeasure level determination unit 1104 ends the present flow.

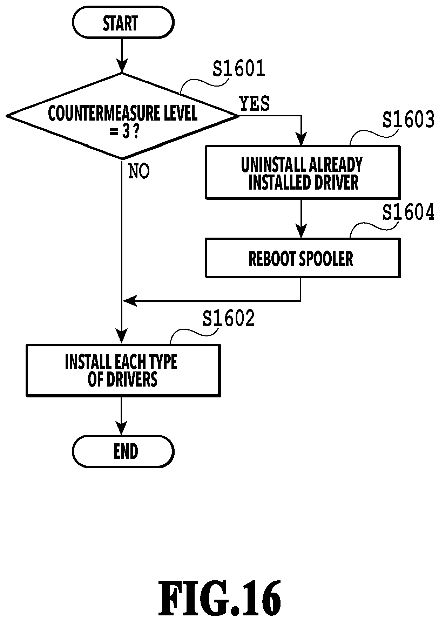

Fig. 16 is a flowchart illustrating a detailed processing flow of the driver installation processing (S1402) in Fig. 14. First, in S1601, the driver installation unit 406 determines whether the result of the countermeasure level determination processing S1401 is the countermeasure level 3. If it is determined that it is other than the countermeasure level 3, the processing proceeds to S1602, and if it is determined that it is the countermeasure level 3, the processing proceeds to S1603. Note that, the countermeasure level used in the present step is the countermeasure level that is determined by the countermeasure level determination unit 1104 in S1401 and obtained by the driver installation unit 406.

In S1602, the driver installation unit 406 installs each type of the drivers (the printer driver 403, the scanner driver 404, or the fax driver 405) bundled together with the application 401. Thereafter, the present flow ends.

On the other hand, if it is determined as YES in S1601, the processing proceeds to S1603, and the driver installation unit 406 uninstalls the already installed driver. In S1604, the application 401 reboots a print spooler. This is for avoiding a situation where the update installation cannot be normally applied unless rebooting the PC 101 because the driver module already installed on the PC 101 holds the print spooler. After S1604, in S1602, the driver installation unit 406 installs each type of the drivers bundled together with the application 401. Thereafter, the present flow ends.

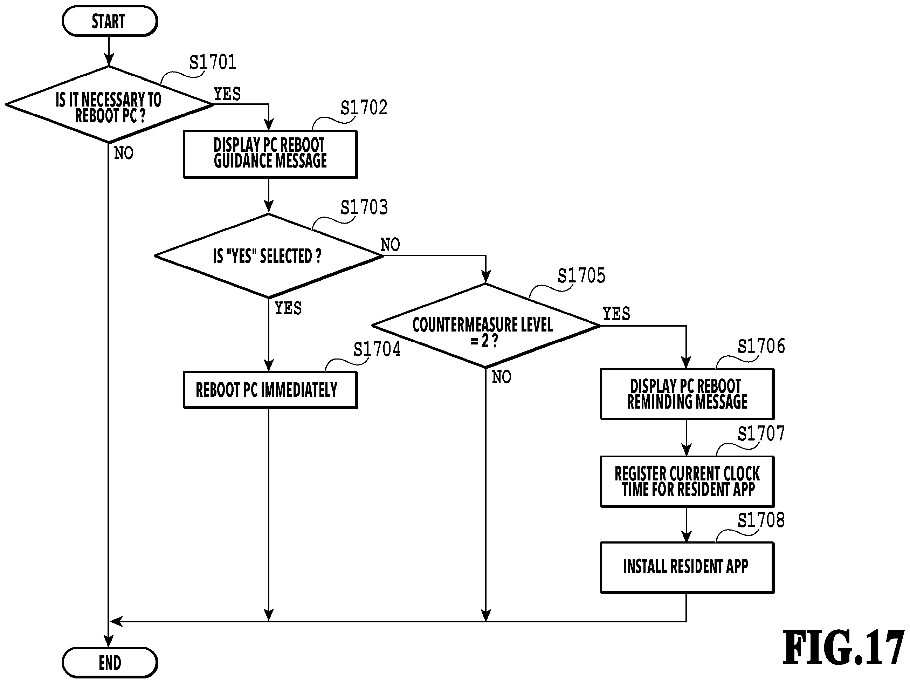

Fig. 17 is a flowchart illustrating a detailed processing flow of the reboot guidance processing (S1403) in Fig. 14.

First, in S1701, as with the processing in S901 in Fig. 9, the reboot determination unit 407 determines the necessity of rebooting the PC 101 for update installation of the driver as a result of the driver installation in the driver installation processing S1402. If it is determined that reboot of the PC is unnecessary, the reboot determination unit 407 ends the present flow. On the other hand, if it is determined that reboot of the PC 101 is necessary, the reboot determination unit 407 proceeds to S1702.

In S1702, the reboot determination unit 407 displays the PC reboot selection message 601 on the monitor 201 of the PC 101. In S1703, if the user presses the "YES" button 602 of the PC reboot selection message 601, the processing proceeds to S1704, and the reboot determination unit 407 executes immediate reboot of the PC 101. Thereafter, the reboot determination unit 407 ends the present flow. On the other hand, in S1703, if the user presses the "NO" button 603 or the × button at the upper right of the screen of the PC reboot selection message 601, the processing proceeds to S1705.

In S1705, the reboot determination unit 407 determines whether the countermeasure level set in the countermeasure level determination processing S1401 is 2. If the countermeasure level is other than 2 (if it is determined as NO in S1705), the reboot determination unit 407 ends the present flow. On the other hand, if the countermeasure level is 2 (if it is determined as YES in S1705), the processing proceeds to S1706.

In S1706, the reboot determination unit 407 displays the PC reboot reminding message 604 on the monitor 201. If the user presses the "OK" button 605 or the × button at the upper right of the screen in the PC reboot reminding message 604, the reboot determination unit 407 closes the PC reboot reminding message 604.

In S1707, the reboot determination unit 407 registers the current clock time information on the registry in the PC 101 for the resident app 408 to periodically display the PC reboot notification pop-up 701. After S1707, the reboot determination unit 407 installs the resident app 408. The processing by the resident app 408 is similar to that in Fig. 10. After S1708, the reboot determination unit 407 ends the present flow.

As described above, according to the present embodiment, the application 401 changes the installation sequence or the method of guiding reboot of the PC 101 for the user in accordance to the countermeasure level. With such a configuration, it is possible to prevent the user from facing the failure of the already installed driver as much as possible even in a case where the failure remains in the old device driver already installed on the PC 101. Additionally, in the present embodiment, comparing with the Embodiment 1, it is possible to minimize the opportunity that the user is notified again by the message box or the pop-up.

Moreover, according to the present embodiment, it is described that, as the contents of processing of the countermeasure level 3, the application 401 executes uninstallation of the already installed driver and reboot of the print spooler. However, on the other hand, depending on the specification of the PC 101, there is a risk that the display time of the during-installation screen 501 may be longer than a case of new installation or update installation. To deal with this, the application 401 may guide the PC reboot under the operating specification of the OS without rebooting the spooler. Furthermore, in a case where the module as the target of the update installation is other than the driver module held by the print spooler, the application 401 may skip the uninstallation of the already installed driver S1603 and the spooler reboot S1604.

Note that, in the present embodiment, an example where the trouble levels in Fig. 13A or the countermeasure levels in Figs. 13A and 13B have three stages; however, it is not limited thereto. For example, the stages of the trouble levels and the countermeasure levels may be increased or decreased. Additionally, the trouble levels and the countermeasure levels may not be divided into the same number of stages.

Additionally, in the present embodiment, an example where the countermeasure levels and the contents of processing by the application 401 are associated with each other as illustrated in Fig. 13B is described; however, it is not limited thereto. For example, the contents of processing of the countermeasure level 3 and the countermeasure level 2 may be exchanged or may be changed into different processing contents.

Moreover, in the present embodiment, an example where the trouble history information 1101 is bundled in the same package as the application 401 is described; however, it is not limited thereto. For example, the trouble history information 1101 may be managed on a Web server, the application 401 may access the server through a network, and the contents may be referred to or automatically downloaded to obtain the information.

### <Other Embodiments>

In the above-described embodiments, the processing in a case of update installation of the driver is described; however, it is not limited thereto. For example, the above-described embodiments may be applied to a case of update installation of general software in the PC provided with the high-speed start-up function. Additionally, the above-described embodiments are effective not only for update installation but also in a case of installing new software.

Embodiment(s) of the present invention can also be realized by a computer of a system or apparatus that reads out and executes computer executable instructions (e.g., one or more programs) printed on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

## Claims

1. A control method of an information processing apparatus (101), comprising:
installing a predetermined program(S801); and
executing (S802) a predetermined notification to notify and prompt a user to reboot the information processing apparatus based on a case where a predetermined function is enabled in the information processing apparatus, the predetermined function being related to processing for a case where a shutdown operation of the information processing apparatus is performed,
wherein
the predetermined function is a function of setting the information processing apparatus to hibernation instead of completely shutting down the information processing apparatus in a case where the shutdown operation of the information processing apparatus is performed, and
the information processing apparatus is completely shut down in a case where the shutdown operation of the information processing apparatus is performed while the predetermined function is not enabled;
**characterized in that**
the execution executes the predetermined notification upon completion of processing performed by the installing; and
in a case where the predetermined function is enabled (S905:YES), the executing executes the predetermined notification (604) to notify (S906) the user that a reboot of the information processing apparatus is required to apply updated contents as a result of said installation, and that said updated contents will not be applied if the shutdown operation is performed.

2. The control method according to claim 1, wherein
in a case (S905:NO) where the predetermined function is disabled in the information processing apparatus, the predetermined notification is not executed.

3. The control method according to claim 1, further comprising:
in a case where the predetermined program is installed, displaying (S9O2) a selection screen (601) for accepting from the user selection of rebooting (602) the information processing apparatus or not (603), wherein
the predetermined notification is executed based on a case (S9O3:NO) where selection of not rebooting the information processing apparatus is made in the selection screen and also (S9O5:YES) the predetermined function is enabled in the information processing apparatus.

4. The control method according to claim 2, wherein
in a case (S9O3:YES) where selection of rebooting the information processing apparatus is made in the selection screen, reboot (S9O4) of the information processing apparatus is executed without executing the predetermined notification regardless of whether the predetermined function is enabled in the information processing apparatus.

5. The control method according to claim 1, wherein
the predetermined notification is not executed in a case (S9O3:NO) where selection of not rebooting the information processing apparatus is made in the selection screen and also (S9O5:NO) the predetermined function is not enabled in the information processing apparatus.

6. The control method according to any one of claims 1 to 5, wherein
the predetermined notification is executed by an installer that installs the predetermined program.

7. The control method according to any one of claims 1 to 6, wherein
the predetermined program is a printer driver.

8. The control method according to claim 1, further comprising:
installing another program that is for executing the predetermined notification and is different from the predetermined program.

9. The control method according to claim 8, further comprising:
in a case where the predetermined program is installed, displaying a selection screen for accepting from the user selection of rebooting the information processing apparatus or not, wherein
the other program is set to execute the predetermined notification based on a case where selection of not rebooting the information processing apparatus is made in the selection screen and also the predetermined function is enabled in the information processing apparatus.

10. The control method according to claim 8, wherein
the other program is set not to execute the predetermined notification based on a case where selection of not rebooting the information processing apparatus is made in the selection screen and also the predetermined function is not enabled in the information processing apparatus.

11. The control method according to claim 8, wherein
the other program executes (S1004) the predetermined notification based on a case (S1003:YES) where a predetermined time elapses.

12. The control method according to claim 8, wherein
a program that executes the predetermined notification based on a case where the predetermined function is enabled in the information processing apparatus and the other program are different from each other, and
a screen (604) that is displayed (S906) by the predetermined notification that is executed by the program that executes the predetermined notification based on a case where the predetermined function is enabled in the information processing apparatus and a screen (701) that is displayed (S1004) by the predetermined notification that is executed by the other program are different from each other.

13. The control method according to any one of claims 8 to 12, wherein
a screen (701) that is displayed by the predetermined notification that is executed by the other program includes a region (702) for accepting from the user selection of rebooting the information processing apparatus or not (703).

14. An information processing apparatus (101), comprising:
an installation unit (406) that installs a predetermined program; and
a notification unit (401) that executes a predetermined notification to notify and prompt a user to reboot the information processing apparatus based on a case where a predetermined function is enabled in the information processing apparatus, the predetermined function being related to shutdown of the information processing apparatus,
wherein
the predetermined function is a function of setting the information processing apparatus to hibernation instead of completely shutting down the information processing apparatus in a case where the shutdown operation of the information processing apparatus is performed, and
the information processing apparatus is completely shut down in a case where the shutdown operation of the information processing apparatus is performed while the predetermined function is not enabled;
**characterized in that**
the notification unit is adapted to execute the predetermined notification upon completion of processing performed by the installation unit; and
in a case where the predetermined function is enabled (S905:YES), the notification unit executes the predetermined notification (604) to notify (S906) the user that a reboot of the information processing apparatus is required to apply updated contents as a result of said installation, and that said updated contents will not be applied if the shutdown operation is performed.

15. A computer readable medium comprising instructions which when executed on an information processing apparatus (101) cause the information processing apparatus to execute the steps of the method according to any one of claims 1 to 13.

## Patentansprüche

1. Steuerverfahren einer Informationsverarbeitungsvorrichtung (101), umfassend:
Installieren eines vorbestimmten Programms (S801); und
Ausführen (S802) einer vorbestimmten Benachrichtigung, um einen Benutzer zu benachrichtigen und aufzufordern, die Informationsverarbeitungsvorrichtung neu zu starten, basierend auf einem Fall, in dem eine vorbestimmte Funktion in der Informationsverarbeitungsvorrichtung aktiviert ist, wobei sich die vorbestimmte Funktion auf eine Verarbeitung für einen Fall bezieht, in dem ein Abschaltvorgang der Informationsverarbeitungsvorrichtung durchgeführt wird,
wobei
die vorbestimmte Funktion eine Funktion ist, bei der die Informationsverarbeitungsvorrichtung auf einen Ruhezustand eingestellt wird, anstatt die Informationsverarbeitungsvorrichtung vollständig abzuschalten, wenn der Abschaltvorgang der Informationsverarbeitungsvorrichtung durchgeführt wird, und
die Informationsverarbeitungsvorrichtung vollständig abgeschaltet wird, falls der Abschaltvorgang der Informationsverarbeitungsvorrichtung durchgeführt wird, während die vorbestimmte Funktion nicht aktiviert ist;
**dadurch gekennzeichnet, dass**
die Ausführung die vorbestimmte Benachrichtigung nach Abschluss der durch das Installieren durchgeführten Verarbeitung ausführt; und
falls die vorbestimmte Funktion aktiviert ist (S905JA), das Ausführen die vorbestimmte Benachrichtigung (604) ausführt, um den Benutzer zu benachrichtigen (S906), dass ein Neustart der Informationsverarbeitungsvorrichtung erforderlich ist, um aktualisierte Inhalte als Ergebnis der Installation anzuwenden, und dass die aktualisierten Inhalte nicht angewendet werden, wenn der Abschaltvorgang durchgeführt wird.

2. Steuerverfahren nach Anspruch 1, wobei
falls die vorbestimmte Funktion in der Informationsverarbeitungsvorrichtung deaktiviert ist (5905:NEIN), die vorbestimmte Benachrichtigung nicht ausgeführt wird.

3. Steuerverfahren nach Anspruch 1, ferner umfassend:
falls das vorbestimmte Programm installiert ist, Anzeigen (S902) eines Auswahlbildschirms (601), um eine Auswahl vom Benutzer anzunehmen, ob die Informationsverarbeitungsvorrichtung neu gestartet werden soll (602) oder nicht (603), wobei
die vorbestimmte Benachrichtigung basierend auf einem Fall (5903:NEIN) ausgeführt wird, in dem eine Auswahl, dass die Informationsverarbeitungsvorrichtung nicht neu gestartet werden soll, auf dem Auswahlbildschirm erfolgt und außerdem (5905:JA) die vorbestimmte Funktion in der Informationsverarbeitungsvorrichtung aktiviert ist.

4. Steuerverfahren nach Anspruch 2, wobei
falls (5903:JA) eine Auswahl, dass die Informationsverarbeitungsvorrichtung neu gestartet werden soll, auf dem Auswahlbildschirm erfolgt, ein Neustart (S904) der Informationsverarbeitungsvorrichtung ausgeführt wird, ohne die vorbestimmte Benachrichtigung auszuführen, unabhängig davon, ob die vorbestimmte Funktion in der Informationsverarbeitungsvorrichtung aktiviert ist.

5. Steuerverfahren nach Anspruch 1, wobei
die vorbestimmte Benachrichtigung nicht ausgeführt wird, falls (5903:NEIN) eine Auswahl, dass die Informationsverarbeitungsvorrichtung nicht neu gestartet werden soll, auf dem Auswahlbildschirm erfolgt und außerdem (5905:NEIN) die vorbestimmte Funktion in der Informationsverarbeitungsvorrichtung nicht aktiviert ist.

6. Steuerverfahren nach einem der Ansprüche 1 bis 5, wobei
die vorbestimmte Benachrichtigung durch ein Installationsprogramm ausgeführt wird, das das vorbestimmte Programm installiert.

7. Steuerverfahren nach einem der Ansprüche 1 bis 6, wobei
das vorbestimmte Programm ein Druckertreiber ist.

8. Steuerverfahren nach Anspruch 1, ferner umfassend:
Installieren eines anderen Programms, das zum Ausführen der vorbestimmten Benachrichtigung dient und sich von dem vorbestimmten Programm unterscheidet.

9. Steuerverfahren nach Anspruch 8, ferner umfassend:
falls das vorbestimmte Programm installiert ist, Anzeigen eines Auswahlbildschirms, um eine Auswahl vom Benutzer anzunehmen, ob die Informationsverarbeitungsvorrichtung neu gestartet werden soll oder nicht, wobei
das andere Programm eingestellt ist, die vorbestimmte Benachrichtigung auszuführen, basierend auf einem Fall, in dem eine Auswahl, dass die Informationsverarbeitungsvorrichtung nicht neu gestartet werden soll, auf dem Auswahlbildschirm erfolgt und außerdem die vorbestimmte Funktion in der Informationsverarbeitungsvorrichtung aktiviert ist.

10. Steuerverfahren nach Anspruch 8, wobei
das andere Programm eingestellt ist, die vorbestimmte Benachrichtigung nicht auszuführen, basierend auf einem Fall, in dem eine Auswahl, dass die Informationsverarbeitungsvorrichtung nicht neu gestartet werden soll, auf dem Auswahlbildschirm erfolgt und außerdem die vorbestimmte Funktion in der Informationsverarbeitungsvorrichtung nicht aktiviert ist.

11. Steuerverfahren nach Anspruch 8, wobei
das andere Programm basierend auf einem Fall (S1003:JA), in dem eine vorbestimmte Zeit verstreicht, die vorbestimmte Benachrichtigung ausführt (S1004).

12. Steuerverfahren nach Anspruch 8, wobei
ein Programm, das basierend auf einem Fall, in dem die vorbestimmte Funktion in der Informationsverarbeitungsvorrichtung aktiviert ist, die vorbestimmte Benachrichtigung ausführt, und das andere Programm voneinander verschieden sind, und
ein Bildschirm (604), der durch die vorbestimmte Benachrichtigung angezeigt wird (S906), die durch das Programm ausgeführt wird, das basierend auf einem Fall, in dem die vorbestimmte Funktion in der Informationsverarbeitungsvorrichtung aktiviert ist, die vorbestimmte Benachrichtigung ausführt, und ein Bildschirm (701), der durch die vorbestimmte Benachrichtigung angezeigt wird (S1004), die durch das andere Programm ausgeführt wird, voneinander verschieden sind.

13. Steuerverfahren nach einem der Ansprüche 8 bis 12, wobei
ein Bildschirm (701), der durch die vorbestimmte Benachrichtigung angezeigt wird, die durch das andere Programm ausgeführt wird, ein Gebiet (702) enthält, um eine Auswahl vom Benutzer anzunehmen, ob die Informationsverarbeitungsvorrichtung neu gestartet werden soll oder nicht (703).

14. Informationsverarbeitungsvorrichtung (101), umfassend:
eine Installationseinheit (406), die ein vorbestimmtes Programm installiert; und
eine Benachrichtigungseinheit (401), die eine vorbestimmte Benachrichtigung ausführt, um einen Benutzer zu benachrichtigen und aufzufordern, die Informationsverarbeitungsvorrichtung neu zu starten, basierend auf einem Fall, in dem eine vorbestimmte Funktion in der Informationsverarbeitungsvorrichtung aktiviert ist, wobei sich die vorbestimmte Funktion auf ein Abschalten der Informationsverarbeitungsvorrichtung bezieht,
wobei
die vorbestimmte Funktion eine Funktion ist, bei der die Informationsverarbeitungsvorrichtung auf einen Ruhezustand eingestellt wird, anstatt die Informationsverarbeitungsvorrichtung vollständig abzuschalten, wenn der Abschaltvorgang der Informationsverarbeitungsvorrichtung durchgeführt wird, und
die Informationsverarbeitungsvorrichtung vollständig abgeschaltet wird, falls der Abschaltvorgang der Informationsverarbeitungsvorrichtung durchgeführt wird, während die vorbestimmte Funktion nicht aktiviert ist;
**dadurch gekennzeichnet, dass**
die Benachrichtigungseinheit dazu ausgelegt ist, die vorbestimmte Benachrichtigung nach Abschluss der durch die Installationseinheit durchgeführten Verarbeitung auszuführen; und
falls die vorbestimmte Funktion aktiviert ist (S905JA), die Benachrichtigungseinheit die vorbestimmte Benachrichtigung (604) ausführt, um den Benutzer zu benachrichtigen (S906), dass ein Neustart der Informationsverarbeitungsvorrichtung erforderlich ist, um aktualisierte Inhalte als Ergebnis der Installation anzuwenden, und dass die aktualisierten Inhalte nicht angewendet werden, wenn der Abschaltvorgang durchgeführt wird.

15. Computerlesbares Medium, umfassend Anweisungen, die, wenn sie auf einer Informationsverarbeitungsvorrichtung (101) ausgeführt werden, die Informationsverarbeitungsvorrichtung veranlassen, die Schritte des Verfahrens nach einem der Ansprüche 1 bis 13 auszuführen.

## Revendications

1. Procédé de commande d'un appareil de traitement d'informations (101), comprenant :
l'installation d'un programme prédéfini (S801) ; et
l'exécution (S802) d'une notification prédéfinie pour notifier et inviter un utilisateur à redémarrer l'appareil de traitement d'informations sur la base d'un cas où une fonction prédéfinie est activée dans l'appareil de traitement d'informations, la fonction prédéfinie étant relative à un traitement pour un cas où une opération d'arrêt de l'appareil de traitement d'informations est effectuée,
dans lequel
la fonction prédéfinie est une fonction de mise en veille prolongée de l'appareil de traitement d'informations au lieu d'arrêter complètement l'appareil de traitement d'informations dans un cas où l'opération d'arrêt de l'appareil de traitement d'informations est effectuée, et
l'appareil de traitement d'informations est complètement arrêté dans un cas où l'opération d'arrêt de l'appareil de traitement d'informations est effectuée pendant que la fonction prédéfinie n'est pas activée ;
**caractérisé en ce que**
l'exécution exécute la notification prédéfinie lors de l'achèvement d'un traitement effectué par l'installation ; et
dans un cas où la fonction prédéfinie est activée (S905 : OUI), l'exécution exécute la notification prédéfinie (604) pour notifier (S906) à l'utilisateur qu'un redémarrage de l'appareil de traitement d'informations est requis pour appliquer des contenus mis à jour en résultat de ladite installation,
et **en ce que** lesdits contenus mis à jour ne seront pas appliqués si l'opération d'arrêt est effectuée.

2. Procédé de commande selon la revendication 1, dans lequel
dans un cas (S905 : NON) où la fonction prédéfinie est désactivée dans l'appareil de traitement d'informations, la notification prédéfinie n'est pas exécutée.

3. Procédé de commande selon la revendication 1, comprenant en outre :
dans un cas où le programme prédéfini est installé, l'affichage (S902) d'un écran de sélection (601) pour accepter par l'utilisateur une sélection de redémarrer (602) l'appareil de traitement d'informations ou non (603),
dans lequel
la notification prédéfinie est exécutée sur la base d'un cas (S903 : NON) où une sélection de ne pas redémarrer l'appareil de traitement d'informations est effectuée dans l'écran de sélection et, également, (S905 : OUI) la fonction prédéfinie est activée dans l'appareil de traitement d'informations.

4. Procédé de commande selon la revendication 2, dans lequel
dans un cas (S903 : OUI) où une sélection de redémarrer l'appareil de traitement d'informations est effectuée dans l'écran de sélection, un redémarrage (S904) de l'appareil de traitement d'informations est exécuté sans exécuter la notification prédéfinie, indépendamment du fait que la fonction prédéfinie soit activée dans l'appareil de traitement d'informations.

5. Procédé de commande selon la revendication 1, dans lequel
la notification prédéfinie n'est pas exécutée dans un cas (S903 : NON) où une sélection de ne pas redémarrer l'appareil de traitement d'informations est effectuée dans l'écran de sélection et, également, (S905 : NON) la fonction prédéfinie n'est pas activée dans l'appareil de traitement d'informations.

6. Procédé de commande selon l'une quelconque des revendications 1 à 5, dans lequel
la notification prédéfinie est exécutée par un installateur qui installe le programme prédéfini.

7. Procédé de commande selon l'une quelconque des revendications 1 à 6, dans lequel
le programme prédéfini est un pilote d'imprimante.

8. Procédé de commande selon la revendication 1, comprenant en outre :
l'installation d'un autre programme qui est destiné à exécuter la notification prédéfinie et qui est différent du programme prédéfini.

9. Procédé de commande selon la revendication 8, comprenant en outre :
dans un cas où le programme prédéfini est installé, l'affichage d'un écran de sélection pour accepter par l'utilisateur une sélection de redémarrer l'appareil de traitement d'informations ou non, dans lequel
l'autre programme est défini pour exécuter la notification prédéfinie sur la base d'un cas où une sélection de ne pas redémarrer l'appareil de traitement d'informations est effectuée dans l'écran de sélection et, également, la fonction prédéfinie est activée dans l'appareil de traitement d'informations.

10. Procédé de commande selon la revendication 8, dans lequel
l'autre programme est défini pour ne pas exécuter la notification prédéfinie sur la base d'un cas où une sélection de ne pas redémarrer l'appareil de traitement d'informations est effectuée dans l'écran de sélection et, également, la fonction prédéfinie n'est pas activée dans l'appareil de traitement d'informations.

11. Procédé de commande selon la revendication 8, dans lequel
l'autre programme exécute (S1004) la notification prédéfinie sur la base d'un cas (S1003 : OUI) où un temps prédéfini s'écoule.

12. Procédé de commande selon la revendication 8, dans lequel
un programme qui exécute la notification prédéfinie sur la base d'un cas où la fonction prédéfinie est activée dans l'appareil de traitement d'informations, et l'autre programme, sont différents l'un de l'autre, et
un écran (604) qui est affiché (S906) par la notification prédéfinie qui est exécutée par le programme qui exécute la notification prédéfinie sur la base d'un cas où la fonction prédéfinie est activée dans l'appareil de traitement d'informations, et un écran (701) qui est affiché (S1004) par la notification prédéfinie qui est exécutée par l'autre programme, sont différents l'un de l'autre.

13. Procédé de commande selon l'une quelconque des revendications 8 à 12, dans lequel
un écran (701) qui est affiché par la notification prédéfinie qui est exécutée par l'autre programme comprend une région (702) pour accepter par l'utilisateur une sélection de redémarrer l'appareil de traitement d'informations ou non (703).

14. Appareil de traitement d'informations (101), comprenant :
une unité d'installation (406) qui installe un programme prédéfini ; et
une unité de notification (401) qui exécute une notification prédéfinie pour notifier et inviter un utilisateur à redémarrer l'appareil de traitement d'informations sur la base d'un cas où une fonction prédéfinie est activée dans l'appareil de traitement d'informations, la fonction prédéfinie étant relative à un arrêt de l'appareil de traitement d'informations,
dans lequel
la fonction prédéfinie est une fonction de mise en veille prolongée de l'appareil de traitement d'informations au lieu d'arrêter complètement l'appareil de traitement d'informations dans un cas où l'opération d'arrêt de l'appareil de traitement d'informations est effectuée, et
l'appareil de traitement d'informations est complètement arrêté dans un cas où l'opération d'arrêt de l'appareil de traitement d'informations est effectuée pendant que la fonction prédéfinie n'est pas activée ;
**caractérisé en ce que**
l'unité de notification est adaptée pour exécuter la notification prédéfinie lors de l'achèvement d'un traitement effectué par l'unité d'installation ; et
dans un cas où la fonction prédéfinie est activée (S905 : OUI), l'unité de notification exécute la notification prédéfinie (604) pour notifier (S906) à l'utilisateur qu'un redémarrage de l'appareil de traitement d'informations est requis pour appliquer des contenus mis à jour en résultat de ladite installation,
et **en ce que** lesdits contenus mis à jour ne seront pas appliqués si l'opération d'arrêt effectuée.

15. Support lisible par ordinateur comprenant des instructions lesquelles, lorsqu'elles sont exécutées sur un appareil de traitement d'informations (101), amènent l'appareil de traitement d'informations à exécuter les étapes du procédé selon l'une quelconque des revendications 1 à 13.
